# FASCICULE DE BREVET EUROPEEN

(11) **EP 1 156 578 B1**
(45) Date de publication et mention de la délivrance du brevet: **07.04.2010**
(21) Numéro de dépôt: 01110561.6
(22) Date de dépôt: 30.04.2001
(51) Int. Cl.: H02K 37/12, H02K 5/173

(54) **Moteur pas-à-pas en forme de disque**
Scheibenförmiger Schrittmotor
Planar stepping motor

(30) Priorité: 19.05.2000 CH 10122000
(43) Date de publication de la demande: 21.11.2001
(73) Titulaire: Portescap Singapore Pte. Ltd., Singapore 048621 (SG)
(72) Inventeur: Laoun, Magdi, 2300 La Chaux-de-Fonds (CH)
(74) Mandataire: Reuteler, Raymond Werner

(56) Documents cités:
- US-A- 4 330 727
- US-A- 4 714 853
- US-A- 4 922 145
- US-A- 5 844 338
- PATENT ABSTRACTS OF JAPAN vol. 18, no. 17 (E-1488), 12 janvier 1994 (1994-01-12) -& JP 05 252713 A (SONY CORP), 28 septembre 1993 (1993-09-28)
- PATENT ABSTRACTS OF JAPAN vol. 1996, no. 1, 31 janvier 1996 (1996-01-31) -& JP 07 244922 A (MATSUSHITA ELECTRIC IND CO LTD), 19 septembre 1995 (1995-09-19)

## Description

La présente invention concerne un moteur pas-à-pas, et notamment un moteur pas-à-pas ayant un aimant multipolaire sous forme de disque.

Un moteur de ce type est décrit dans le brevet américain US 4,330,727. Le moteur selon ce brevet comporte un rotor ayant un axe de moteur traversant et un aimant multipolaire sous forme de disque fixé sur l'axe par des pièces de fixation intermédiaires. Le rotor est monté dans un stator et supporté par deux paliers, un de chaque côté de l'aimant disque, sous forme de roulements à billes. Ce moteur a deux phases et comporte deux bobines entourant des éléments de circuit magnétique dans chaque moitié du stator. Les circuits magnétiques ont des entrefers dans lesquels se positionne l'aimant du rotor.

Dans un moteur de ce type, l'organe pour l'entraînement de l'objet à déplacer est fixé sur l'axe de moteur à l'extérieur du boîtier. Pour certaines applications, l'encombrement d'un tel ensemble par rapport au couple fourni et le nombre de pas par tour ne sont pas satisfaisants. D'autre part, on cherche constamment à réduire le coût de fabrication, à améliorer la précision et à augmenter les performances, notamment à augmenter la vitesse et le couple.

Des moteurs de ce type sont également décrits dans les brevets américains US 4,714,853 et US 4,922,145.

Un but de l'invention est de réaliser un moteur pas-à-pas compact, précis et ayant de bonnes performances. Pour certaines applications, il est avantageux d'avoir un moteur de faible longueur dans la direction de l'axe de rotation. Il est aussi avantageux de réduire le coût de fabrication des moteurs pas-à-pas.

Des buts de l'invention sont réalisés par un moteur pas-à-pas selon la revendication 1.

Dans la présente invention, un moteur pas-à-pas comporte un stator comprenant au moins deux circuits magnétiques, et un rotor monté en rotation sur un stator par un palier, le rotor comprenant un organe muni d'aimants ou un aimant multipolaire essentiellement sous forme de disque monté sur une partie de rotor, ladite partie de rotor étant fixée à une partie radialement extérieure de l'aimant, et une partie radialement intérieure de l'aimant étant disposée dans l'entrefer desdits circuits magnétiques.

La partie de rotor peut avoir une ouverture centrale à travers laquelle s'étend une partie du stator.

Avantageusement, la construction selon l'invention permet de réaliser un moteur pas-à-pas particulièrement compact.

La partie de rotor peut être sous forme d'un anneau essentiellement plat. La partie de rotor peut en outre comprendre des dents agencées sur son pourtour pour engager des dents ou trous complémentaires d'un objet ou organe à déplacer.

La partie de rotor et/ou l'aimant peuvent être fixés sur une couronne mobile du palier, de préférence la couronne extérieure du palier, le palier étant de préférence un roulement à billes. Le roulement à billes peut être un roulement supportant les efforts axiaux et radiaux. La couronne intérieure du palier peut être montée sur une surface cylindrique d'une partie du stator. Afin de réduire la longueur du moteur dans la direction suivant son axe de rotation, la couronne intérieure du roulement peut être plus courte que la couronne extérieure du palier contre laquelle est fixée la partie de rotor.

La construction selon l'invention permet de réaliser un moteur avec un seul palier, notamment un roulement à billes à quatre points de contact ayant un grand diamètre, permettant ainsi d'avoir une construction extrêmement compacte mais néanmoins très rigide. De surplus, le moteur est fait d'un petit nombre de pièces, de sorte que sa fabrication est économique.

Le stator peut comprendre une première partie de stator sur laquelle sont montées des bobines et une deuxième partie de stator sous forme de culasses montées contre cette première partie pour fermer les circuits magnétiques comprenant un entrefer entre des parties radialement extérieures de la première partie de stator et des culasses, respectivement. Il y a une culasse pour chaque phase du moteur, de sorte que les circuits magnétiques des différentes phases sont séparés. Chaque circuit magnétique peut donc comprendre une bobine et une culasse.

Pour un moteur à deux phases, deux bobines et deux culasses sont disposées symétriquement de part et d'autre d'une ligne de symétrie passant par le centre de rotation du moteur. Les parties radialement extérieures des culasses et de la première partie de stator peuvent être munies de dents ou autres formes d'extension en regard l'une de l'autre pour former des paires de pôles statoriques qui attirent des paires de pôles inverses de l'aimant quand la bobine du circuit magnétique correspondant est alimentée en courant électrique. Les paires de pôles de l'aimant se mettent en regard des paires de pôles statoriques et, ensuite, l'autre bobine est alimentée de façon à attirer des paires de pôles de l'aimant, et ainsi de suite, pour faire avancer le rotor. Les dents ou extensions de chaque partie de culasse sont disposées symétriquement par rapport à la ligne de symétrie, mais ne sont pas diamétralement symétriques puisque les dents sont déplacées angulairement, comme pour les moteurs pas-à-pas conventionnels, de sorte que les pôles de l'aimant en regard des extensions ou dents d'un des circuits magnétiques ne sont pas en regard des dents ou extensions de l'autre circuit magnétique.

Il est à noter que le moteur selon l'invention peut avoir plus que deux phases sans sortir du cadre de l'invention. Par exemple, le moteur peut avoir plusieurs circuits magnétiques occupant des secteurs de la forme généralement cylindrique du moteur, le secteur ayant un angle essentiellement de 120° pour un moteur à trois phases et 90° pour un moteur à quatre phases.

La première partie de stator sur laquelle les bobines sont montées peut être en une matière frittée ayant une bonne perméabilité magnétique mais une pauvre conductivité électrique, de façon à limiter les pertes par courants de Foucault dans une construction compacte et peu coûteuse.

D'autres buts et aspects avantageux de l'invention ressortiront des revendications, de la description et des dessins annexés, dans lesquels:
la Fig. 1 est une vue en perspective d'une forme d'exécution d'un moteur pas-à-pas selon l'invention;
la Fig. 2 est une vue en perspective éclatée du moteur selon la Fig. 1;
la Fig. 3 est une coupe selon la ligne III-III de la Fig. 1;
la Fig. 4 est un graphique montrant la relation entre la force tangentielle à la périphérie du rotor et le rayon extérieur de l'aimant;
la Fig. 5 est un graphique montrant la relation entre la force tangentielle à la périphérie du rotor et le nombre de paires de pôles.

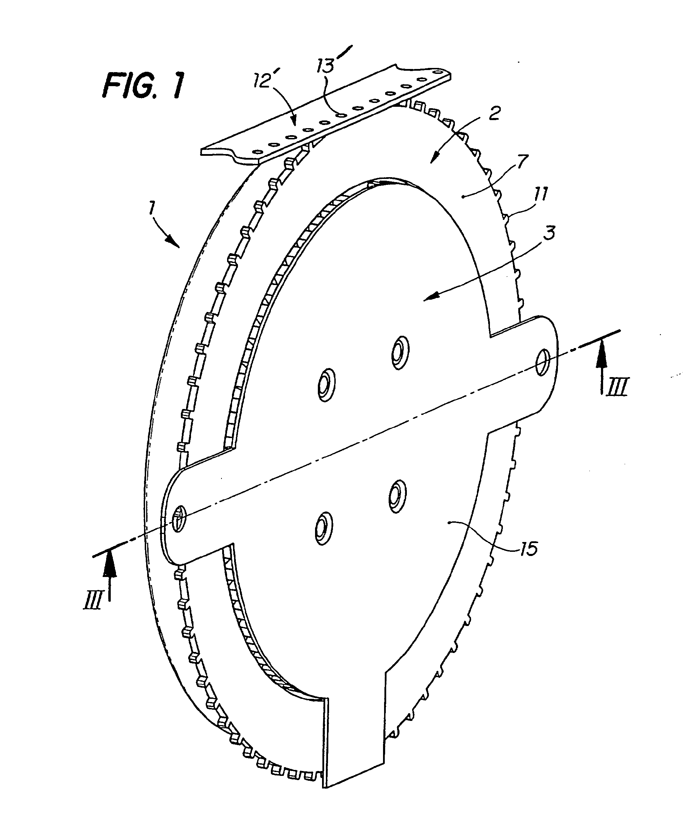

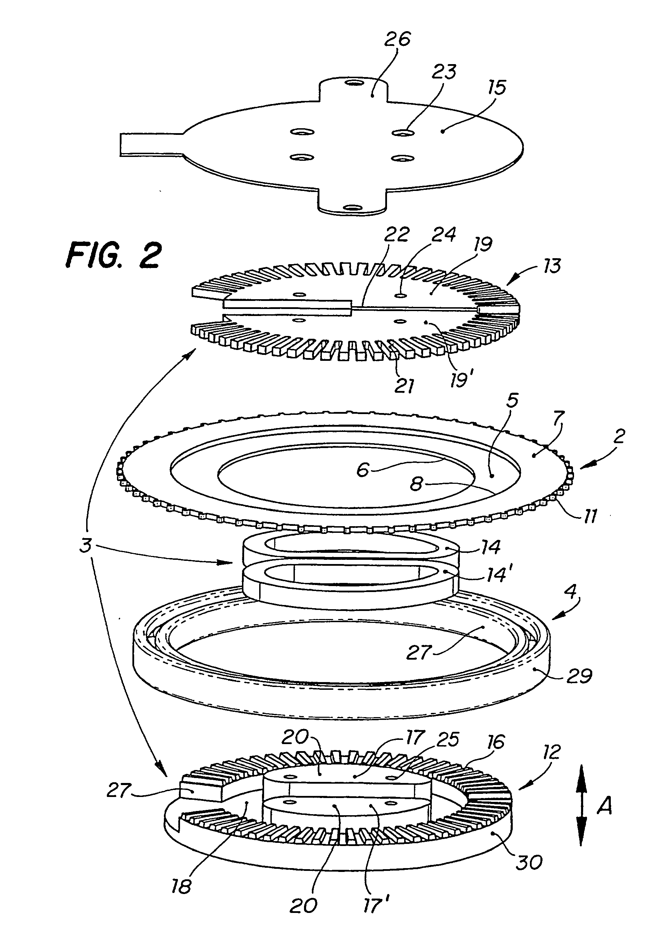

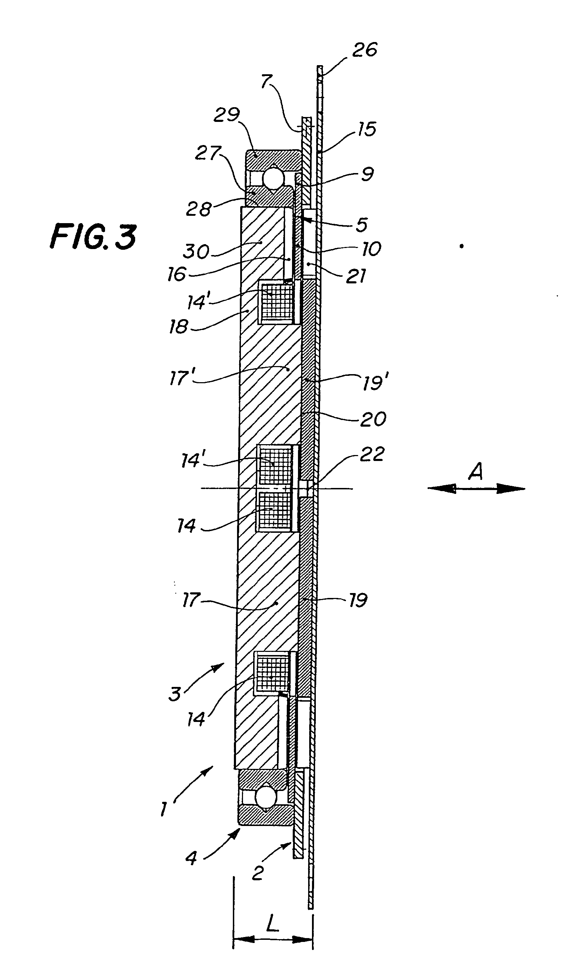

En faisant référence aux Figures 1 à 3, un moteur pas-à-pas 1 comporte un rotor 2, un stator 3 et un palier 4 pour le montage en rotation du rotor 2 au stator 3. Le rotor 2 comporte un aimant permanent multipolaire 5 sous forme d'un anneau ou d'un disque ayant une ouverture centrale 6. Le rotor comporte en outre une partie de rotor 7 sous forme d'un anneau ou disque ayant une ouverture centrale 8, cette partie étant fixée à l'aimant 5, et plus particulièrement contre une partie radialement extérieure 9 de l'aimant. Une partie radialement intérieure 10 de l'aimant s'étendant entre l'ouverture centrale 6 de l'aimant et l'ouverture centrale 8 de la partie 7 du rotor, est munie d'une pluralité de paires de pôles magnétiques disposées sur le tour de l'aimant, par exemple sous forme de segments d'anneau où les paires de pôles adjacentes ont des champs magnétiques opposés. Le rotor est en outre muni de dents 11 sur son pourtour pour engager et entraîner un organe ou objet à déplacer 12' qui est, dans l'exemple montré, une bande ayant des perforations 13'. Cette construction permet donc de traduire la rotation du rotor directement en un mouvement de translation d'une bande ou autre organe d'entraînement 12'.

Il est possible de former le rotor 2 d'une seule pièce, l'aimant permanent et la partie de rotor extérieure étant d'une seule pièce en une matière magnétique permanente.

D'autres constructions sont aussi possibles, par exemple au lieu d'utiliser un aimant multipolaire, on peut fixer une pluralité d'aimants sur le pourtour intérieur de la partie de rotor 7.

Le stator 3 comporte une première partie de stator 12, une deuxième partie de stator 13, des bobines 14, 14' et un flasque 15.

La première partie de stator 12 comporte, sur son pourtour, une pluralité de dents ou de protubérances 16 s'étendant dans la direction axiale A (la direction de l'axe de rotation du moteur) et des parties de noyau 17, 17', autour desquelles sont montées les bobines électriques 14, 14' respectivement. Les protubérances 16 et les parties de noyau 17, 17' sont reliées solidairement par une base sous forme de disque 18.

La deuxième partie de stator 13 comporte deux culasses 19, 19', une pour chaque bobine et donc pour chaque phase du moteur, les culasses étant fixées contre les surfaces libres 20 des parties de noyau 17, 17', les surfaces étant essentiellement orthogonales à l'axe A. Les culasses 19, 19' sont munies de protubérances ou extensions 21 sur leurs pourtours de façon à être disposées en regard des protubérances 16 de la première partie du stator quand les parties sont assemblées. L'espace entre les protubérances ou extensions 21, 16 des deuxième et première parties de stator constitue les entrefers des circuits magnétiques respectifs formés chacun par une des culasses, une des parties de noyau 17, 17' et la base 18. Pour séparer les circuits magnétiques des deux phases, les culasses 19, 19' sont séparées par une fente 22.

La première partie de stator 12 et/ou la deuxième partie de stator 13 peuvent être en une matière frittée ayant une bonne perméabilité magnétique mais une faible conductivité électrique, de façon à réduire les pertes par courants de Foucault. Ceci permet d'éviter une construction du circuit magnétique en feuilles, notamment pour diminuer le coût de fabrication tout en permettant d'obtenir des formes tridimensionnelles, par exemple des dents et du noyau, compactes et rigides. Les culasses 19 sont sous forme d'un disque relativement mince par rapport avec la première partie de stator, et peuvent également être en une matière frittée ou simplement une plaque de matière (non-frittée) ayant une bonne perméabilité magnétique.

Le flasque 15 peut être monté contre la deuxième partie de stator 13 et comporter des trous 23 alignés avec des trous 24, 25 des deuxième et première parties de stator, les trous 25 de la première partie étant par exemple filetés pour l'assemblage de ces composants. Le flasque peut être muni de divers éléments, tels que des pattes de fixation 26, de manière à pouvoir monter le moteur sur un support.

Le stator comporte un passage 27 traversant l'anneau extérieur 30 de la base 18 pour le logement d'un connecteur et/ou une petite carte électronique reliant les fils conducteurs des bobines à un circuit électronique ou électrique externe.

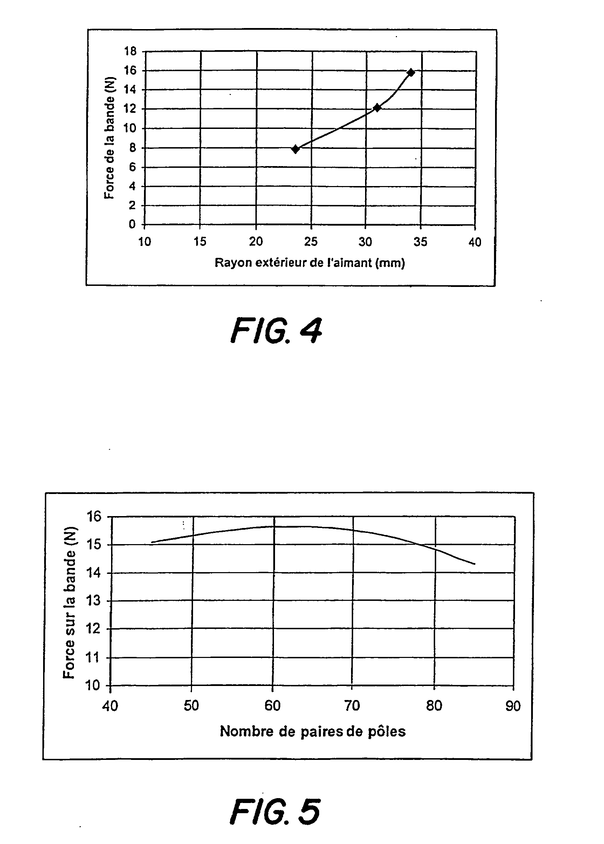

Il est à noter que les deux culasses 19 sont disposées symétriquement de part et d'autre d'une ligne de symétrie passant par le centre de rotation du moteur, mais que les extensions ou protubérances sont déplacées angulairement de sorte que des dents d'une culasse par rapport à l'autre ne sont pas diamétralement opposées. Ce déplacement angulaire est une caractéristique des moteurs pas-à-pas connus et ne sera donc pas décrit plus en détail. L'espacement angulaire entre les dents est de 2π/64 radians, dans ce cas particulier, ce qui correspond à 256 pas/tour, puisqu'il y a quatre pas par paire de pôles statoriques pour un moteur à deux phases. Dans un exemple particulier, le moteur comporte un rotor ayant un diamètre extérieur de 81,5 mm et est muni de 64 dents, de sorte qu'il y a un espacement de 4 mm entre les dents. Le moteur permet de déplacer la bande 12' avec une force d'environ 15 Newton en 20 msec avec une précision de l'ordre de 15 microns. Dans un tel exemple, la longueur L du moteur est d'environ 10 mm. Le choix de 64 paires de pôles statoriques permet d'optimiser la force tangentielle (force sur la bande 12') telle qu'illustrée sur la courbe de force par rapport au nombre de paires de pôles dans la Fig. 5. Le diamètre relativement grand de l'aimant, notamment en raison de sa disposition autour des bobines, permet de réaliser une construction très compacte mais fournissant un couple élevé, comme on peut le constater en se référant à la Fig. 4 où la force tangentielle (force sur la bande 12') est proportionnelle au rayon extérieur de l'aimant.

Le palier 4 est, dans cette forme d'exécution, un roulement à billes à quatre points de contact supportant des composants de force radiaux et axiaux. La rigidité inhérente à un tel roulement est améliorée en augmentant son diamètre. La présente invention profite de cette caractéristique, en ce qu'elle dispose le palier 4 autour du stator 3. Cette construction permet entre autres de munir le moteur d'un seul roulement et donc d'avoir une longueur L très petite dans la direction axiale A, tout en ayant une grande rigidité et précision. La couronne intérieure 27 est montée sur la surface cylindrique extérieure 28 de la première partie de stator 12, et la couronne extérieure 29 du roulement 4 est fixée contre la partie de rotor 7. La couronne intérieure 27 a une longueur plus petite que la couronne extérieure 29, selon la direction axiale A, pour permettre de disposer la partie radialement extérieure 9 de l'aimant contre une partie radialement inférieure de la partie de rotor 7.

## Revendications

1. Moteur pas-à-pas (1) comportant un stator (3) comprenant au moins deux circuits magnétiques et un rotor (2) monté en rotation sur le stator (3) par un palier (4), le rotor (2) comprenant un organe muni d'aimants ou d'un aimant multipolaire (5), essentiellement sous forme de disque ayant une ouverture centrale (6), monté sur une partie de rotor (7), **caractérisé en ce que** ladite partie de rotor (7) est fixée à une partie radialement extérieure (9) de l'aimant ou de l'organe muni d'aimants, une partie radialement intérieure de l'aimant (10) ou de l'organe muni d'aimants étant disposée dans l'entrefer desdits circuits magnétiques.

2. Moteur selon la revendication 1, **caractérisé en ce que** ladite partie de rotor (7) est munie d'une ouverture centrale (8) à travers laquelle s'étend une partie de stator (3).

3. Moteur selon l'une des revendications précédentes, **caractérisé en ce que** ladite partie de rotor (7) a une forme essentiellement plate et comprend des dents (11 ) agencées sur son pourtour.

4. Moteur selon l'une des revendications précédentes, **caractérisé en ce que** le rotor (2) est fixé à une couronne radialement extérieure (29) du palier, alors que le stator (3) est fixé à une couronne radialement intérieure (27) du palier.

5. Moteur selon l'une des revendications précédentes, **caractérisé en ce que** le palier (4) comporte un roulement à billes à quatre points de contact.

6. Moteur selon l'une des deux revendications précédentes, **caractérisé en ce que** la couronne radialement intérieure (27) du palier (4) est plus courte que la couronne radialement extérieure (29) du palier selon la direction (A) de l'axe de rotation du moteur.

7. Moteur selon l'une des revendications précédentes, **caractérisé en ce que** le stator (3) comporte une première partie de stator (12) comprenant des parties de noyau (17, 17'), une pour chaque bobine électrique (14, 14') du circuit magnétique, une base (18) et une pluralité de protubérances ou extensions (16).

8. Moteur selon la revendication précédente, **caractérisé en ce qu'**il comprend en outre une deuxième partie de stator (13) sous forme de culasses (19, 19'), une pour chaque phase de moteur, et étant fixé contre la première partie de stator (12) de façon à former un circuit magnétique pour chaque phase de moteur.

9. Moteur selon l'une des deux revendications précédentes, **caractérisé en ce que** la première partie de stator (12) est faite d'une seule pièce en matière frittée ayant une bonne perméabilité magnétique.

10. Moteur selon l'une des trois revendications précédentes, **caractérisé en ce que** la deuxième partie de stator (13) a une forme essentiellement plate et comporte des protubérances ou extensions radiales (21) sur le pourtour disposées en regard des extensions ou protubérances (16) de la première partie du stator (12) pour former des paires de pôles statoriques.

11. Moteur selon l'une des revendications précédentes, **caractérisé en ce qu'**il ne comporte qu'un palier (4).

## Claims

1. Stepping motor (1) comprising a stator (3) with at least two magnetic circuits and a rotor (2) mounted rotatably on the stator (3) via a bearing (4), the rotor (2) comprising an organ with magnets or a multipolar magnet (5), essentially in the shape of a disc with a central opening (6) mounted on a rotor portion (7), **characterized in that** said rotor portion (7) is fixed to a radially external portion (9) of the multipolar magnet or organ with magnets, a radially internal portion (10) of the magnet or organ with magnets being arranged within the air gap of said magnetic circuits.

2. Motor according to claim 1, **characterized in that** said rotor portion (7) is provided with a central opening (8) through which a stator portion (3) extends.

3. Motor according to any of the preceding claims, **characterized in that** said rotor portion (7) is essentially flat and comprises teeth (11) disposed on its periphery.

4. Motor according to any of the preceding claims, **characterized in that** the rotor (2) is fixed to a radially external ring (29) of the bearing while the stator (3) is fixed to a radially internal ring (27) of the bearing.

5. Motor according to any of the preceding claims, **characterized in that** the bearing (4) comprises a ball bearing with four contact points.

6. Motor according to one of the two preceding claims, **characterized in that** the radially internal ring (27) of the bearing (4) is shorter than the radially external ring (29) of the bearing in the direction (A) of the motor's axis of rotation.

7. Motor according to any of the preceding claims, **characterized in that** the stator (3) comprises a first stator portion (12) with core portions (17, 17'), one for each electrical coil (14, 14') of the magnetic circuit, a base (18), and a plurality of protuberances or extensions (16).

8. Motor according to the preceding claim, **characterized in that** in addition it comprises a second stator portion (13) in the form of yokes (19, 19'), one for each motor phase, which are set against the first stator portion (12) so as to form a magnetic circuit for each motor phase.

9. Motor according to one of the two preceding claims, **characterized in that** the first stator portion (12) is made of a single piece of sintered material having a good magnetic permeability.

10. Motor according to one of the three preceding claims, **characterized in that** the second stator portion (13) has an essentially flat shape and comprises radial protuberances or extensions (21) on the periphery facing the extensions or protuberances (16) of the first stator portion (12) so as to form stator pole pairs.

11. Motor according to any of the preceding claims, **characterized in that** it comprises only one bearing (4).

## Patentansprüche

1. Schrittmotor (1), einen Stator (3) aufweisend, der mindestens zwei Magnetkreise umfasst und einen Rotor (2), der mit Hilfe eines Lagers (4) rotierend auf dem Stator (3) montiert ist, wobei der Rotor (2) ein mit Magneten oder einem mehrpoligen Magneten ausgestattetes Organ (5) umfasst, im wesentlichen in Form einer Scheibe mit einer zentralen Öffnung (6), montiert auf einem Rotorabschnitt (7), **dadurch gekennzeichnet, dass** der Rotorabschnitt (7) auf einem radial äußeren Abschnitt (9) des Magneten oder des mit Magneten ausgestatteten Organs befestigt ist, wobei ein radial innerer Abschnitt (10) des Magneten oder des mit Magneten ausgestatteten Organs im Spalt der Magnetkreise angeordnet ist.

2. Motor nach Anspruch 1, **dadurch gekennzeichnet, dass** der Rotorabschnitt (7) mit einer zentralen Öffnung (8) ausgestattet ist, durch die sich ein Statorabschnitt (3) erstreckt.

3. Motor nach einem der vorangehenden Ansprüche, **dadurch gekennzeichnet, dass** der Rotorabschnitt (7) eine im wesentlichen flache Form hat und Zähne (11) umfasst, die auf seinem Umfang ausgebildet sind.

4. Motor nach einem der vorangehenden Ansprüche, **dadurch gekennzeichnet, dass** der Rotor (2) an einem radial äußeren Kranz (29) des Lagers befestigt ist, wogegen der Stator (3) an einem radial inneren Kranz (27) des Lagers befestigt ist.

5. Motor nach einem der vorangehenden Ansprüche, **dadurch gekennzeichnet, dass** das Lager (4) ein Kugellager mit vier Kontaktpunkten aufweist.

6. Motor nach einem der zwei vorangehenden Ansprüche, **dadurch gekennzeichnet, dass** der radial innere Kranz (27) des Lagers (4) gemäß der Richtung (A) der Rotationsachse des Motors kürzer ist als der radial äußere Kranz (29) des Lagers.

7. Motor nach einem der vorangehenden Ansprüche, **dadurch gekennzeichnet, dass** der Stator (3) einen ersten Statorabschnitt (12) aufweist, der Kernabschnitte (17, 17') umfasst, einen für jede elektrische Spule (14, 14') des Magnetkreises, eine Basis (18) und eine Vielzahl von Protuberanzen oder Erweiterungen (16).

8. Motor nach einem der vorangehenden Ansprüche, **dadurch gekennzeichnet, dass** er weiterhin einen zweiten Statorabschnitt (13) in Form von Jochen (19, 19') umfasst, eins für jede Motorphase, und am ersten Statorabschnitt (12) derart befestigt ist, dass für jede Motorphase ein Magnetkreis gebildet wird.

9. Motor nach einem der zwei vorangehenden Ansprüche, **dadurch gekennzeichnet, dass** der erste Statorabschnitt (12) aus einem einzigen Teil aus gesintertem Material mit einer guten magnetischen Permeabilität besteht.

10. Motor nach einem der drei vorangehenden Ansprüche, **dadurch gekennzeichnet, dass** der zweite Statorabschnitt (13) eine im wesentlichen flache Form hat und radiale Protuberanzen oder Erweiterungen (21) auf dem Umfang aufweist, die gegenüber Erweiterungen oder Protuberanzen (16) des ersten Statorabschnitts (12) angeordnet sind, um Statorpolpaare zu bilden.

11. Motor nach einem der vorangehenden Ansprüche, **dadurch gekennzeichnet, dass** er nur ein Lager (4) aufweist.
